# EUROPÄISCHE PATENTSCHRIFT

(11) **EP 1 475 449 B1**
(45) Veröffentlichungstag und Bekanntmachung des Hinweises auf die Patenterteilung: **13.01.2010**
(21) Anmeldenummer: 04003221.1
(22) Anmeldetag: 13.02.2004
(51) Int. Cl.: C22C 21/00, B32B 15/01, F16C 33/12

(54) **Aluminiumknetlegierung**
Wrought aluminium alloy
Alliage d'aluminium forgeable

(30) Priorität: 14.03.2003 AT 4042003
(43) Veröffentlichungstag der Anmeldung: 10.11.2004
(73) Patentinhaber: Miba Gleitlager GmbH, 4663 Laakirchen (AT)
(72) Erfinder: Mergen, Robert, Dr., 4813 Altmünster (AT); Manner, Markus, Dipl.-Ing., 3362 Mauer (AT)
(74) Vertreter: Ofner, Clemens

(56) Entgegenhaltungen:
- EP-A- 0 005 560
- EP-A- 1 229 141
- WO-A-00/06787
- WO-A-00/06788
- DE-A- 4 319 867
- DE-A- 19 938 995
- GB-A- 2 066 846
- GB-A- 2 067 220
- US-A- 4 806 308
- US-A- 5 286 445
- US-A- 5 525 246
- US-A1- 2003 012 972
- PATENT ABSTRACTS OF JAPAN Bd. 0070, Nr. 05 (M-184), 11. Januar 1983 (1983-01-11) -& JP 57 163725 A (TAIHOU KOGYO KK), 8. Oktober 1982 (1982-10-08)
- PATENT ABSTRACTS OF JAPAN Bd. 2000, Nr. 04, 31. August 2000 (2000-08-31) -& JP 2000 017363 A (TAIHO KOGYO CO LTD), 18. Januar 2000 (2000-01-18)
- PATENT ABSTRACTS OF JAPAN Bd. 0103, Nr. 03 (C-378), 16. Oktober 1986 (1986-10-16) -& JP 61 117244 A (TAIHO KOGYO CO LTD), 4. Juni 1986 (1986-06-04)
- PATENT ABSTRACTS OF JAPAN Bd. 0161, Nr. 56 (C-0930), 16. April 1992 (1992-04-16) -& JP 04 009443 A (TAIHO KOGYO CO LTD), 14. Januar 1992 (1992-01-14)
- PATENT ABSTRACTS OF JAPAN Bd. 0112, Nr. 62 (C-442), 25. August 1987 (1987-08-25) -& JP 62 063636 A (TAIHO KOGYO CO LTD), 20. März 1987 (1987-03-20)

## Beschreibung

Die Erfindung betrifft ein Dreischicht-Lagerelement mit einer Trägerschicht aus einer Aluminiumknetlegierung, mit einer Aluminiummatrix, in der eine Weichphase und Hartpartikel eingelagert sind, wobei die Weichphase durch zumindest ein Element aus einer ersten Elementgruppe umfassend Zinn, Antimon, Indium und Wismut, gebildet ist und die Hartpartikel durch Scandium und Zirkonium sowie durch zumindest ein Element aus einer zweiten Elementgruppe, umfassend Kupfer, Mangan, Kobalt, Chrom, Zink, Magnesium und Eisen bzw. durch intermetallische Phasen aus Scandium, Zirkonium mit Aluminium bzw. Aluminium mit den Elementen aus der zweiten Elementgruppe gebildet sind.

Die heutige Motorenindustrie lässt neben vielen anderen Entwicklungsrichtungen zwei prinzipielle Trends erkennen. Zum einen werden Motoren immer leistungsstärker und zum anderen werden diese Motoren hinsichtlich ihres Gewichtes leichter. Es sei in diesem Zusammenhang nur an das sogenannte "Drei-Liter-Auto" erinnert, das in regelmäßigen Zeitabständen in den verschiedensten Medien propagiert wird. Diese Vorgaben der Motorenindustrie wirken sich in der Folge auch auf die diversen Zulieferbetriebe, wie z.B. die Hersteller von Lagerelementen, aus. Lagerelemente, wie z.B. Gleitlager, haben demzufolge in den vergangenen Jahren eine entsprechende Entwicklung durchgemacht. Vom ursprünglichen Einschichtlager ausgehend entstand, um die diversen Anforderungen an diese Lagerelemente erfüllen zu können, wie beispielsweise die Tragfähigkeit, die Schmierfähigkeit etc., das derzeitige Mehrschichtgleitlager. Ein derartiges Lager besteht im allgemeinen aus einer, die mechanischen Beanspruchungen aufnehmenden Stützschale (zumeist aus Stahl), auf der eine Schicht aus der jeweiligen Lagerlegierung angeordnet ist. Auf der Lagerlegierung wird üblicherweise eine weitere sehr dünne Schicht angeordnet, auch als "Overlay" bezeichnet, die beispielsweise galvanisch aufgebaut werden kann. Diese weitere, sehr dünne Schicht weist normalerweise einen sehr hohen Anteil an sogenannten Weichphasen, wie beispielsweise Blei oder Zinn, auf, sodass diese Schicht anpassungsfähig und einbettfähig für diverse Abriebe aus den zu lagernden Teilen, z.B. Wellen, ist. Infolge der geringen Dicke dieses "Overlay's" ist diese Schicht auch mechanisch ausreichend belastbar und dient diese als sogenannte Laufschicht.

Durch die darunter liegende Lagermetallschicht bleibt das Lager auch bei stärkerem Verschleiß der Laufschicht gebrauchsfähig, wozu auch diese Lagermetallschicht einen entsprechenden Anteil an den genannten Weichphasen aufweist. Um eine Diffusion von Weichphasen aus der Laufschicht in die Lagermetallschicht zu vermeiden und damit auch eine eventuell auftretende Versprödung zu verhindern, kann zwischen der Lauf- und der Lagermetallschicht eine Diffusionssperre, z.B. für das Zinn, angeordnet sein. Diese Diffusionssperre kann aus Nickel gebildet werden.

Üblich ist weiters, zwischen der Stützschale und dem Lagermetall eine sogenannte Bindefolie anzubringen, um die werkstoffspezifischen Eigenschaften der beiden Schichten soweit zu kompensieren, dass ein ausreichender Zusammenhalt auch bei hohen Belastungen des Lagers ermöglicht wird. Diese Bindefolie kann z.B. aus Aluminium gebildet sein.

Ein derartiges Lager aus der WO 98/17833 A bekannt. Diese WO-A beschreibt insbesondere eine Aluminiumlegierung für eine Schichte, insbesondere eines Gleitlagers, die bis auf erschmelzungsbedingte Verunreinigungen siliziumfrei ist und die neben Zinn als Hauptlegierungselement einerseits wenigstens je ein Element aus einer Blei und Wismut enthaltenden Elementgruppe und andererseits aus einer Magnesium und Zink enthaltenden Elementgruppe aufweist. Der Mindestanteil des Zinns beträgt 16 Gew.-%. Alle übrigen Legierungsbestandteile sind auf insgesamt höchstens 11 Gew.-% beschränkt. Der Anteil des jeweiligen Elementes aus der neben Blei und Wismut auch Antimon und Indium enthaltenden Elementgruppe beträgt zwischen 10 % und 75 % der maximale Löslichkeit des jeweiligen Elementes im gesamten Zinngehalt.

Im Stand der Technik wurde weiters zur Verbesserung der tribologischen Eigenschaften vorgeschlagen - z.B. in der WO 97/22725 A -, Aluminiumlegierungen für Gleitlager, die als Hauptlegierungselement Zinn enthalten, derart auszubilden, dass ein Hartstoff aus zumindest einem Element einer Eisen, Mangan, Nickel, Chrom, Kobalt, Kupfer, Platin, Magnesium, Antimon enthaltenden ersten Elementgruppe zur Bildung intermetallischer Phasen, z.B. Aluminiden, in den Grenzbereichen der Matrix zugesetzt ist, wobei ein weiteres Element aus einer zweiten Mangan, Antimon, Chrom, Wolfram, Niob, Vanadium, Kobalt, Silber, Molybdän und Zirkonium enthaltenden Elementgruppe zur Substituierung eines Teils zumindest eines Hartstoffes der ersten Elementgruppe zur Bildung annähernd kugel- bzw. würfelförmiger Aluminide zugesetzt ist. Damit wird erreicht, dass die Kerbwirkung dieser Hartteilchen herabgesetzt ist und somit die Aluminiumlegierung einen höheren Anteil an Weichphasen enthalten kann, wodurch insbesondere auch das Notlaufverhalten verbessert wird.

Die erzielbaren Eigenschaften von Lagermetallwerkstoffen sind stets Kompromisslösungen. Einerseits möchte man erreichen, dass das Notlaufverhalten derartiger Lagermetalle bzw. Lagermetalllegierungen durch die bereits erwähnte Erhöhung von weichen Einlagerungen, wie beispielsweise Zinn oder Blei, verbessert wird, jedoch ist dies nur auf Kosten der mechanischen Belastbarkeit erreichbar. Zur Verbesserung der mechanischen Belastbarkeit wird im Stand der Technik vorgeschlagen u.a. beispielsweise Silizium zuzulegieren. Eine derartige Legierung ist aus der DE 197 30 549 A1 bekannt. Diese DE-A1 beschreibt eine Aluminiumlegierung mit 10 Gew-% bis 25 Gew.-% Zinn sowie Zusätzen von Kupfer, Nickel und Mangan, die jeweils in einem Anteil von 0,2 Gew.-% bis 2,0 Gew.-% zulegiert werden können. Weiters weist diese Aluminiumlegierung einen Gehalt an Silizium von 0,2 Gew.-% bis 2,0 Gew.-% auf und soll das Verhältnis des gewichtsprozentuellen Anteils von Kupfer zum gewichtsprozentuellen Anteil von Nickel und das Verhältnis des gewichtsprozentuellen Anteils an Mangan zum gewichtsprozentuellen Anteil an Silizium zwischen 0,6 und 1,5 liegen. Silizium bewirkt dabei eine Erhöhung der Härte und Reduzierung der Anfälligkeit für fressenden Verschleiß, wobei die Ausbildung grober Aluminium-Kupfer-Mangan-Phasen verhindert wird, bevorzugt Nickel-Kupfer-Aluminide und Mangan-Silizium-Aluminide gebildet werden. Diese Aluminide liegen auch nach einer Wärmebehandlung bei 250 °C fein verteilt vor.

Aus der DE 43 32 433 A1 ist eine Aluminium-Zinn-Legierung bekannt, die 7 % bis 20 % Zinn enthält. Zusätzlich kann die Lagerlegierung bis zu 4 % Silizium neben weiterer Legierungselemente, wie z.B. Mangan, Magnesium, Vanadium, Nickel, Chrom, Zirkonium, Kupfer, Antimon oder Titan aufweisen. Als Mechanismus für die Matrixhärtung durch Silizium wird hierin angegeben, dass diese aus der Aluminiummatrix in Form von Siliziumteilchen auskristallisieren, wodurch insgesamt die Festigkeit der Lagerlegierung vergrößert wird. Dadurch, dass die Siliziumteilchen in der Struktur verteilt sind, wird nur die weiche Aluminiummatrix auf der Oberfläche abgenutzt, sodass die Oberfläche mikroskopisch uneben wird. Folglich tragen die Siliziumteilchen, die als konvexe Teilchen zurückbleiben, eine hohe Last, während sie gleichzeitig die Eigenschaft, sich nicht zu verbinden, behalten. Die konkaven Teile dienen dazu das Öl aufzunehmen, sodass die Lagerlegierungen unter den Bedingungen eines dünnen Ölfilmes und eines Metall-zu-Metall-Kontaktes hoher Belastung standhält. Die feinverteilten Siliziumteilchen haben weiterhin die Funktion, winzige Erhebungen und Grate auf der zugehörigen Welle abzuschleifen und die Beständigkeit gegenüber fressendem Verschleiß zu verbessern.

Zur Matrixhärtung von Aluminiumlegierungen wurde verschiedenstlich bereits der Versuch unternommen, Übergangsmetalle, wie beispielsweise Scandium, zuzulegieren. Für Gusslegierungen wurde dies in der WO 96/10099 A vorgeschlagen, wobei der Scandiumgehalt zwischen 0,01 Gew.-% und 10 Gew.-% betragen kann.

In den davon zu unterscheidenden Knetlegierungen (siehe z.B. WO 96/10099 A) wurde Scandium ebenfalls als Matrixhärter vorgeschlagen, so in der WO 00/06787 A für eine Lagermetallschicht oder in der WO 00/06788 A für eine Bindeschicht. Eine in diesen beiden genannten Dokumenten beschriebene Legierung kann z.B. 0,15 Gew-% bis 1,0 Gew-% Scandium, in Summe 3 Gew-% eines der Elemente Mangan, Kupfer oder Zirkonium, in Summe 4 Gew-% eines der Elemente Chrom, Eisen und Kobalt sowie Zinn bis 6,5 Gew-% enthalten. Der härtende Effekt beruht darauf, dass Scandium mit Aluminium sogenannte A₃M-Phasen bildet, wodurch derartige Legierungen durch die feindisperse Verteilung dieser A₃M-Phasen eine hohe Duktilität aufweisen und trotzdem kein ausgeprägtes Aushärtungsverhalten zeigen. Diese Knetlegierungen weisen trotz des Abbaues von Verfestigungen aus dem Herstellungsprozess durch Wärmebehandlungen hohe mechanische Festigkeitswerte auf. Eine Lagerlegierung auf Aluminiumbasis, die zumindest ein Weichphasen bildendes Element aus der Gruppe Blei, Zinn, Indium, Antimon oder Wismut aufweist sowie Silizium als hartes Element und weitere Verstärkungselemente, ausgewählt aus der Gruppe Kupfer, Chrom, Magnesium, Mangan, Nickel, Zink und Eisen sowie Verfeinerungselemente aus der Gruppe Titan, Bor, Zirkonium, Vanadium, Gallium, Scandium, Yttrium und Elemente der Seltenen Erden der Atomnummer 57 bis 71 enthält ist auch bereits aus der DE 36 40 698 A1 bekannt.

Aus der DE 43 19 867 A ist ein Mehrschichtgleitlager bekannt, welches neben der Stützschicht aus Stahl sowie einer Gleitschicht mit Polytetraflourethylen, 5 Vol-% bis 30 Vol-% eines metallischen Füllstoffes sowie 5 Vol-% bis 40 Vol-% Polyvinylidenflourid, eine dazwischen angeordneten Trägerschicht aus einer Bronze, wie beispielsweise einer Zinnbronze oder einer Zinnbleibronze, aufweist.

Ein dazu vergleichbares Mehrschichtgleitlager ist aus der EP 0 005 560 A bekannt, bei dem auf die metallische Stützschicht eine poröse Trägerschicht mit 5 Gew.-% bis 25 Gew-% Blei, 5 Gew.-% bis 15 Gew-% Zinn, Rest Kupfer aufgesintert ist, wobei wiederum in den Poren der Trägerschicht Polytetraflourethylen eingelagert ist.

Die Aufgabe der Erfindung ist es, ein Mehrschichtgleitlager mit vereinfachtem Aufbau und zumindest im Vergleich zu herkömmlichen Mehrschichtgleitlagern gleichbleibenden, tribologischen Eigenschaften zu schaffen.

Diese Aufgabe der Erfindung wird jeweils eigenständig durch durch das Dreischicht-Lagerelement gemäß Anspruch 1 gelöst. Die eingangs genannte Aluminiumlegierung ist siliziumfrei, wobei das oder die Element(e) der ersten Elementgruppe in einem Ausmaß von in Summe von max. 4,5 Gew-%, das oder die Element(e) der zweiten Elementgruppe in einem Ausmaß von in Summe max. 8,5 Gew-%, vorzugsweise 3,5 Gew.-%, Scandium und Zirkonium in einem Ausmaß von in Summe max. 0,8 Gew-% vorliegen und den Rest Aluminium mit dem üblichen erschmelzungsbedingten Verunreinigungen bildet. Von Vorteil ist dabei, dass durch die Zusammensetzung der erfindungsgemäßen Aluminiumlegierung die Laufschicht direkt auf die Trägerschicht, welche auf der Stützschale, z.B. aus Stahl, angeordnet ist, aufgebracht werden kann und somit auf die bisher übliche Bindeschicht sowie den Nickeldamm verzichtet werden kann. Die Zusammensetzung ermöglicht es weiters, auf die in Hochleistungslagern üblicherweise verwendeten Bleibronzen zu verzichten, sodass Werkstoffe bzw. Metalle verwendet werden können, die in Hinblick auf ihre Toxizität und die Recyclingfähigkeit zumindest weitgehendst unbedenklich sind. Insbesondere kann auf die Verwendung von Bleilegierungen verzichtet werden. Die Festigkeit, vor allem die dynamische Festigkeit, des gebildeten Verbundes kann höhere Werte erreichen, als bei derzeit üblichen Dreischichtlagem bzw. bei herkömmlichen Stahl/AlZn4,5-Verbunden. Zudem sind die tribologischen Eigenschaften vergleichbar mit jenen von AlSn6CuNi. Von Vorteil ist auch die hohe Korrosionsbeständigkeit gegenüber Schweröl und während des Einsatzes in Gasmotoren sowie der größere Widerstand im Vergleich zu AlZn4,5 gegen Kavitation. Die Verbundbildung mit Stahl kann ohne haftvermittelnde Zwischenschicht erfolgen. Die Trägerschicht ist auch für Sputterlager einsetzbar. Von Vorteil ist dabei auch, dass die Gestehungskosten derartiger Lagerelemente vergleichbar sind mit den heute üblichen Mehrschichtgleitlagern gleicher Qualität. Die erfindungsgemäße Aluminiumlegierung weist durch plastische Verformbarkeit zur Anpassung an Geometriefehler und Änderungen entsprechende Notlaufeigenschaften auf, d.h. das selbst bei durch die Belastung entstandenen Fehlstellen in der Laufschicht die Einsatzfähigkeit des Lagerelementes weiter gegeben ist. Eine entsprechende Matrixfestigkeit wird durch die aus dem Stand der Technik bekannten A₃M-Phasen aus Scandium und Zirkonium mit Aluminium erreicht.

Eine weitere Verbesserung dieser Eigenschaften wird dadurch erreicht, dass der Anteil der Weichphase an der Aluminiumlegierung mindestens 0,1 Gew-% beträgt bzw. der Anteil des oder der Elemente(s) der zweiten Elementgruppe mindestens in Summe 0,1 Gew-% beträgt bzw. der Anteil an Scandium und Zirkonium mindestens in Summe 0,05 Gew-%, insbesondere 0,1 Gew-% beträgt, wobei der Anteil an Zirkonium im Bereich zwischen 0,01 Gew-% und 0,5 Gew-%, insbesondere im Bereich zwischen 0,05 Gew.-% und 0,23 Gew.-%, bzw. der Anteil an Scandium zwischen 0,05 Gew.-% und 0,5 Gew-%, insbesondere im Bereich von 0,05 Gew.-% bis 0,25 Gew.-%, betragen kann.

Eine vorteilhafte Weiterbildungen des Lagerelementes wird dadurch erreicht, dass die Trägerschicht direkt auf der Stützschale angeordnet ist, wodurch ein entsprechender, vereinfachter Aufbau realisiert werden kann.

Möglich ist es auch die Laufschicht durch eine Blei-, Zinn-, Wismut-, Indium- oder Kupfer-Basislegierung zu bilden bzw. die Laufschicht aus einer Kunststoffschicht aufzubauen, insbesondere aus einer Gruppe umfassend Polyamid 6, Polyamid 66, POM, Silikone, PEK, PI, TPI, PEEK, PPS, PVDF, PTFE, sowie Mischungen daraus, wodurch die erfindungsgemäße Aliminiumlegierung sowie das diese umfassende Lagerelement universell für verschiedenste Einsatzzwecke angepasst werden kann.

Es ist dabei von Vorteil, wenn die Kunststoffschicht einen Festschmierstoff, wie z.B. MoS₂, Grafit oder dgl., enthält, wodurch die Lagereigenschaften dieser Kunststoffschicht weiter verbessert werden und das Lagerelement auch völlig ohne bzw. mit geringsten Mengen eines Schmierstoffes, wie z.B. eines Schmieröls oder Schmierfettes, einsetzbar ist.

Schließlich ist es auch möglich, die Laufschicht durch einen Gleitlack zu bilden.

Zum besseren Verständnis der Erfindung wird diese anhand nachfolgender Beispiele näher erläutert.

Es zeigen jeweils in vereinfachter, schematischer Darstellung:
- Fig. 1: ein Lagerelement in Form einer Gleitlagerhalbschale;
- Fig. 2: eine Tabelle verschiedener erfindungsgemäßer Aluminiumlegierungen;
- Fig. 3: eine Gegenüberstellung von Spannungs-Dehnungsverläufen verschiedener Aluminiumlegierungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

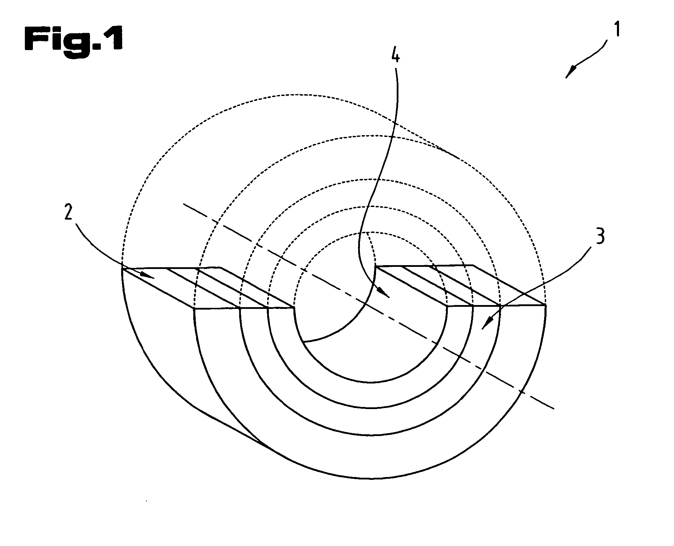

Fig. 1 zeigt ein erfindungsgemäßes Lagerelement 1 in Form einer Gleitlagerhalbschale.

Es sei bereits an dieser Stelle erwähnt, dass die Erfindung nicht auf Lagerelemente 1 in Form von Gleitlagerhalbschalen beschränkt ist, sondern vielmehr aus der gegenständlichen Aluminiumlegierung auch andere Lagerelemente 1 gebildet werden können, wie z.B. Anlaufringe. Zudem ist es möglich, Lagerelemente nicht nur in Form von Halbschalen sondern auch in Vollschalenbauweise herzustellen.

Das Lagerelement 1 nach Fig. 1 ist aus einer Stützschale 2, einer erfindungsgemäßen Trägerschicht 3 sowie einer Laufschicht 4 aufgebaut. Die Stützschale 2 besteht üblicherweise aus Stahl, kann aber selbstverständlich auch aus vergleichbaren Werkstoffen bestehen, mit welchen die selbe bzw. eine ähnliche Funktion, nämlich die Bereitstellung der mechanischen Festigkeit des Lagerelementes 1, realisiert werden kann. Die mechanische Festigkeit des gesamten Lagerelementes 1 ist dabei abhängig vom jeweiligen Einsatzgebiet, sodass beispielsweise auch verschiedenste Kupferlegierungen, wie z.B. Messing, Bronzen, Verwendung finden können. Zudem wird durch die Stützschale 2 eine gewisse Formstabilität gewährleistet.

Die Trägerschicht 3 ist durch die erfindungsgemäße Aluminiumlegierung gebildet. Diese besteht aus einer Aluminiummatrix in der zumindest eine Weichphase sowie Hartpartikel eingelagert sind. Die zumindest eine Weichphase wird dabei durch zumindest ein Element aus einer ersten Elementgruppe umfassend Zinn, Antimon, Indium und Wismut gebildet. Die Hartpartikel sind aus zumindest einem Element aus einer zweiten Elementgruppe umfassend Kupfer, Mangan, Kobalt, Chrom und Eisen bzw. durch die Elemente Scandium und/oder Zirkonium gebildet. Ebenfalls möglich ist , dass diese Hartpartikel durch intermetallische Phasen aus den letztgenannten Elementen bzw. den Elementen der zweiten Elementgruppe mit Aluminium bzw. durch aus den genannten Elementen gebildete intermetallische Phasen aufgebaut sind.

Mit Hilfe der Weichphase ist es möglich, zum einen der Trägerschicht 3 die Fähigkeit zu verleihen, eine ausreichend stabile Verbindung mit der darauf angeordneten Laufschicht 4 auszubilden, zum anderen ist es damit möglich, dem Lagerelement 1 Notlaufeigenschaften zu verleihen, wenn in der Laufschicht 4 infolge des Betriebes des Lagerelementes 1 Fehlstellen entstehen und somit die Trägerschicht 3 zumindest annähernd direkt mit einem zu lagernden Bauteil, wie z.B. einer Welle, in Kontakt kommt. Es wird damit dem Lagerelement 1 auch eine Einbettfähigkeit für aus dem Abrieb infolge der Verwendung des Lagerelementes 1 stammenden Festpartikel zu verliehen. Die Hartpartikel verleihen der Aluminiumlegierung die erforderliche mechanische Festigkeit.

Als Laufschicht 4 eignen sich insbesondere Legierungen auf Zinn-, Wismut-, Indium- oder Aluminiumbasis sowie gegebenenfalls auf Bleibasis bzw. hochbleihältige CuPb-Basislegierungen. Insbesondere sind höherzinnhältige Zinnbasislegierungen von Vorteil.

Einsetzbare Lagermetalle auf Bleibasis wären beispielsweise PbSb10Sn6, PbSb15Sn10, PbSb15SnAs, PbSb14Sn9CuAs, PbSn10Cu2, PbSn18Cu2, PbSn10TiO2, PbSn9Cd, PbSn10.

Als Lagermetalle auf Zinnbasis sind beispielsweise zu nennen SnSb8Cu4 und SnSb12Cu6Pb.

Andererseits kann die Laufsschicht 4 aber auch durch eine Kunststoffschicht gebildet sein. Insbesondere vorteilhafte Beispiele hierfür sind Polyamid 6, Polyamid 66, Polyoximethylen (POM), verschiedenste Silikone, Polyaryletherketon (PEK), Polyimid (PI), TPI, Polyaryletheretherketon (PEEK), Polyphenylensulfid (PPS), Polyvinylidendiflourid (PVDF), Polytetraflourethylen (PTFE) sowie diverse Mischungen daraus.

Sollte die Gleitfähigkeit der Kunststoffschicht für sich alleine noch nicht ausreichend sein, so ist es von Vorteil, wenn den diversen Kunststoffen Festschmierstoffe, wie z.B. Molybdändisulfid (MoS₂), Grafit oder dgl. zugesetzt werden. Ebenso können diverse Silikonöle beigemengt werden.

Zur Erhöhung der mechanischen Festigkeit der Kunststoffschicht ist es möglich, weitere Zusätze zu verwenden, wie beispielsweise Fasermatrices, z.B. aus Armidfasern, Hartstoffe, wie z.B. Carbide, Oxide, Nitride.

Die Kunststoffschicht kann auch durch einen sogenannten Gleitlack gebildet werden.

Mit den genannten Kunststoffen sind Laufschichten 4 mit guten Gleit- und Notlaufeigenschaften, die gegebenenfalls sogar einen Trockenlauf ermöglichen, realisierbar. Sie zeichnen sich durch Wartungsarmut aus. Es ist ein schmierstoffarmer oder schmierstofffreier Betrieb möglich. Gegebenenfalls lässt sich eine Schmierung durch Wasser erzielen, was insbesondere von Vorteil ist, wenn das erfindungsgemäße Lagerelement 1 z.B. für Pumpen verwendet wird. Neben einer entsprechenden Gewichtsreduzierung ist auch eine geringe Kantenpressungsempfindlichkeit beobachtbar.

Neben der genannten Verwendung des erfindungsgemäßen Lagerelementes 1 gibt es noch eine Reihe weiterer Verwendungsmöglichkeiten, insbesondere die Verwendung als Gleitlager oder als Anlaufring in der Motorenindustrie.

Erfindungsgemäß ist vorgesehen, dass die Aluminiumlegierung das oder die Element(e) der ersten Elementgruppe in einem Ausmaß von in Summe max. 4,5 Gew.-%, das oder die Element(e) der zweiten Elementgruppe in einem Ausmaß von in Summe max. 3,5 Gew.-%, Scandium und Zirkonium in einem Ausmaß von in Summe max. 0,8 Gew.-% enthält, wobei den Rest Aluminium mit den üblichen erschmelzungsbedingten Verunreinigungen bildet. Von Vorteil ist dabei, wenn der Anteil der Weichphase, also der Elemente der ersten Elementgruppe, mindestens 0,1 Gew.-% beträgt. Ebenso hat es sich als vorteilhaft erwiesen, wenn der Anteil des oder der Element(e) der zweiten Elementgruppe mindestens in Summe 0,1 Gew.-% beträgt. Weiters ist es von Vorteil, wenn der Anteil an Scandium und Zirkonium ebenfalls in Summe mindestens 0,1 Gew.-% beträgt. Der Anteil an Zirkonium kann im Bereich zwischen 0,05 Gew.-% und 0,5 Gew.-%, insbesondere im Bereich zwischen 0,05 Gew.-% und 0,23 Gew.-%, betragen und kann der Anteil an Scandium zwischen 0,05 Gew.-% und 0,5 Gew.-%, insbesondere im Bereich von 0,05 Gew.-% und 0,25 Gew.-%, betragen.

Die genannten Zahlenwerte für die angegebenen Bereiche sind jeweils als untere bzw. obere Grenzen des jeweiligen Mengenbereiches zu verstehen, sodass die jeweiligen Randbereiche von 0,23 Gew.-% bis 0,5 Gew.-% für Zirkonium und 0,25 Gew.-% bis 0,5 Gew.-% für Scandium mitumfasst sind.

Kupfer wird im Aluminium in fester Lösung aufgenommen, sodass aluminiumreiche Mischkristalle entstehen und aushärtbare Knetlegierungen herstellbar sind, welche gut verformbar und abwälzbar sind. Kupfer wirkt zudem durch Mischkristallhärtung matrixverstärkend, wobei sich Al₂Cu und Al₃Zr, welches sich bevorzugt aus Aluminium und Zirkonium bildet, unabhängig voneinander bilden, und es zu keiner heterogenen Keimbildung kommt. Die Ausscheidung dieser Kristallite beginnt dabei nahezu gleichzeitig. Durch Kupfer kann die Ermüdungsbeständigkeit der Aluminiumlegierung erhöht werden und ist weiters dadurch auch die Korrosionsbeständigkeit der Aluminiumlegierung, beispielsweise verursacht durch korrosiv wirkende Ölinhaltsstoffe, verbessert.

Zur Verbesserung der Härteeigenschaften ist es von Vorteil, wenn der Aluminiumlegierung Eisen zugesetzt wird. Zirkonium bildet ebenso wie Scandium, wie bereits erwähnt, mit Aluminium sogenannte Al₃M-Phasen, wodurch eine Verfestigung über intermetallische Hartphasen erreicht werden kann. Es wird damit möglich auf eine Siliziumzugabe zu verzichten, sodass auf vorteilhafte Weise die Kerbwirkung, die durch höhere Siliziumgehalte hervorgerufen wird, zumindest teilweise vermindert bzw. herabgesetzt werden kann. Zudem wirken diese beiden Elemente durch die Bildung dieser Trialuminide kornverfeinernd.

Manganzusätze wirken verfestigend und verbessern die Korrosionsbeständigkeit. Es kann damit auch die Rekristallisationstemperatur erhöht werden. Außerdem kann speziell bei kleinen Eisengehalten die Ausbildung von langspießigen, spröden Al₃Fe-Nadeln verhindert werden, indem Eisen von den günstiger geformten Almn-Kristallen aufgenommen wird.

Ebenfalls eine Verfestigung der Aluminiumlegierung wird durch Zusätze von Kobalt und Chrom erreicht.

Prinzipiell sind die Wirkungen der einzelnen Elemente aus dem Stand der Technik bereits bekannt, wie z.B. aus den eingangs genannten Dokumenten. Die Verwendung dieser Elemente für einen Aluminiumlegierung, insbesondere für eine Aluminiumknetlegierung im genannten Mengenbereich, insbesondere für eine Trägerschicht 3, die zwischen der Stützschale 2 und der Laufschicht 4 angeordnet wird und die genannten Eigenschaften, z.B. Notlaufeigenschaften, Haftvermittlung, Korrosionseigenschaften etc., in sich vereint und es damit auf vorteilhafte Weise möglich wird, auf diverse weitere Schichten eines heute üblichen Mehrschichtgleitlagers, wie z.B. Diffusionssperrschichten, zu verzichten, wurde bislang nicht beschrieben.

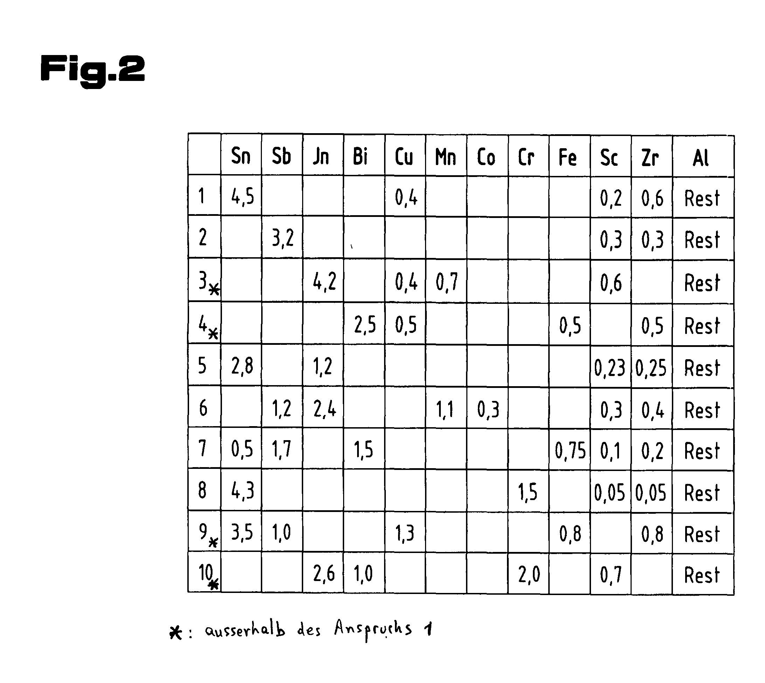

In Ausführungsvarianten der Aluminiumlegierung wurden Legierungen gemäß den in der Tabelle nach Fig. 2 angeführten Zusammensetzungen hergestellt und ihre Eigenschaften vermessen.

Es sei darauf hingewiesen, dass die in der Tabelle angeführten Legierungszusammensetzungen nicht limitierend auf den Schutzbereich der Erfindung zu sehen sind, sondern diese vielmehr ausgewählte Beispiele darstellen und der Fachmann aufgrund gegenständlicher Lehre in der Lage ist, weitere Zusammensetzungen in den angegebenen Grenzen herzustellen und sind diese Zusammensetzungen nicht vom Schutzbereich ausgeschlossen.

Bei den angeführten Beispielen konnte nachgewiesen werden, dass die mechanischen Eigenschaften der Aluminiumlegierung im wesentlichen innerhalb einer bestimmten Bandbreite konstant bleiben. Mit Brandbreite ist dabei gemeint, dass es durchaus möglich ist, die Eigenschaften speziell an den Verwendungszweck anzupassen, indem beispielsweise eines oder mehrere der Elemente in größerem bzw. kleinerem Umfang zugesetzt werden. So kann z.B. durch einen größeren Kupferzusatz, wie dies im Beispiel 9 angegeben ist, eine höhere Festigkeit durch Mischkristallhärtung erreicht werden.

Durch Variation der Scandium- bzw. Zirkoniumgehalte ist es möglich, dass Festigkeitsverhalten bzw. generell die Eigenschaften der Aluminiumlegierung in bezug auf die Kostensituation für deren Herstellung zu optimieren.

Auch in Hinblick auf den Zusatz der die Weichphase bildenden Elemente ist eine Optimierung der Eigenschaften der Aluminiumlegierung möglich, indem je nach Duktilität des Elementes an den jeweiligen Anwendungsfall angepasste Mischungen hergestellt werden, die neben den erwünschten Notlaufeigenschaften auch eine gewisse höhere mechanische Festigkeit, wenngleich diese nicht das Ausmaß erreicht, wie dies durch die Hartpartikel erreicht wird, aufweisen.

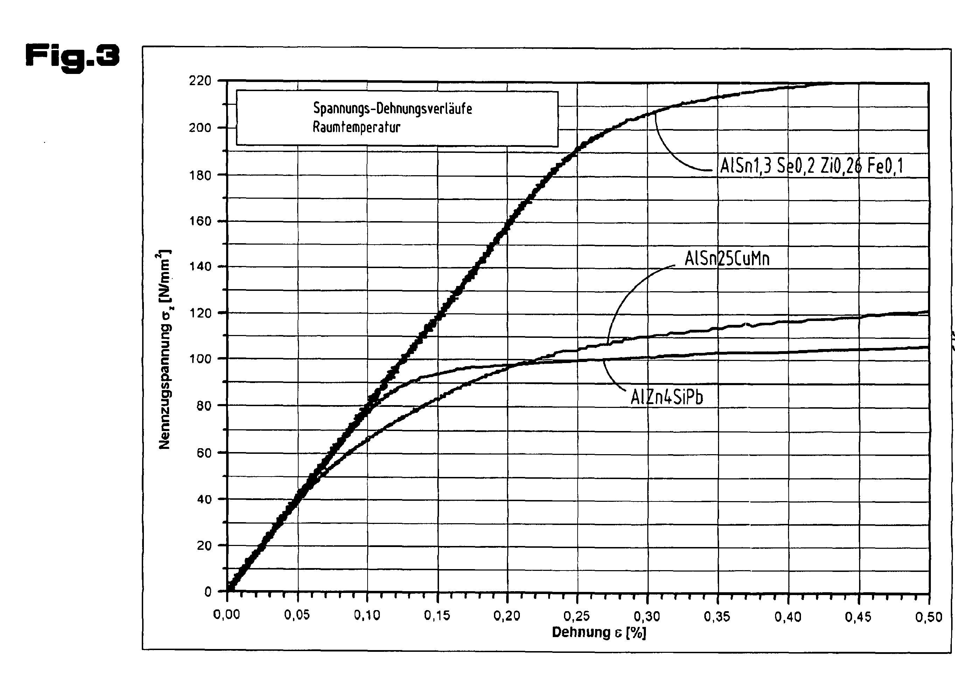

Es wurde weiters eine Aluminiumlegierung der Zusammensetzung AlSn1,3Sc0,2Zr0,26Fe0,1 hergestellt und deren Spannungs-Dehnungsverlauf im Vergleich zu AlSn25CuMn und AlZn4SiPb gemessen. Das Ergebnis ist in Fig. 3 dargestellt, wobei auf der X-Achse die Dehnung ε und auf der Y-Achse die Nennzugspannung σ_{z} [N/mm²] aufgetragen ist. Die Messungen wurden an Streifen nach UN EN1002-1 mit Zugproben E 3 x 8 x 30 mm nach DIN 50 120 durchgeführt.

Wie in Fig. 3 deutlich zu erkennen ist, weist die erfindungsgemäße Aluminiumlegierung (oberste Kurve) ab einer Dehnung 0,1 % gegenüber AlZn4SiPb (unterste Kurve) und ab einer Dehnung von 0,05 % gegenüber AlSn25CuMn (mittlere Kurve) deutlich höhere Werte für die Nennzugspannung auf. D.h., um die selbe Dehnung zu erhalten, müssen bei der Legierung nach der Erfindung deutlich höhere Kräfte bzw. Spannungen vorhanden sein, d.h. dass die Aluminiumlegierung eine entsprechende Festigkeitssteigerung gegenüber den damit verglichenen Aluminiumlegierungen aufweist.

Auch die Bruchfestigkeit ist bei der Legierung nach der Erfindung mit 241 N/mm² im Ver gleich zu 181 N/mm² von AlZn4SiPb deutlich größer, ebenso wie die Elastizitätsgrenze mit 191 N/mm² und 85 N/mm² für AlZn4SiPb.

Die entsprechenden Werte für AlSn25CuMn sind 174 N/mm² für die Bruchfestigkeit und 59 N/mm² für die Elastizitätsgrenze.

Zusammengefasst kann daher festgestellt werden, dass mit der erfindungsgemäßen Aluminiumlegierung eine Verbesserung der mechanischen Eigenschaften bei zumindest vergleichbaren Notlaufeigenschaften, wie sie für Lagerelemente 1 gefordert werden, insbesondere für Gleitlager, erreicht werden kann.

Die Herstellung der Aluminiumlegierung sowie der daraus gefertigten Lagerelemente 1 kann nach aus dem Stand der Technik bekannten Verfahren erfolgen. Als Ausgangsstoffe werden Reinelemente bzw. Reinstelemente verwendet. So kann z.B. die Aluminiumlegierung auf die Stützschale durch Walzen, Plattieren, wie z.B. Elektroplattieren, aufgebracht werden. Auf diesen Verbund kann die Laufschicht 4 durch genannte Verfahren oder aber auch galvanisch, durch aufspritzen, etc., angeordnet werden.

Die Kunststoffschicht kann neben dem Aufwalzen auch aufgespritzt, aufgetaucht oder durch Offsetdruck aufgebracht werden. Galvanische Verfahren sind ebenso möglich.

Obwohl es für Lagerelemente 1 nach der Erfindung nicht zwingend notwendig ist, diverse Hilfszwischenschichten, wie z.B. Diffusionsschichten, Reinaluminiumschichten, Nickeldämme, etc., zwischen den einzelnen Funktionssschichten anzuordnen, können diese selbstverständlich bei Bedarf verwendet werden.

Der Ordnung halber sei abschließend darauf hingewiesen, dass zum besseren Verständnis des Aufbaus des Lagerelementes 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Lagerelement
- 2: Stützschale
- 3: Trägerschicht
- 4: Laufschicht

## Patentansprüche

1. Dreischicht-Lagerelement, insbesondere Gleitlager oder Anlaufring, mit einer Stützschale, einer Laufschicht und einer dazwischen angeordneten Trägerschicht, wobei die Trägerschicht aus einer Aluminiumknetlegierung mit einer Aluminiummatrix, in der zumindest eine Weichphase und Hartpartikel eingelagert sind, wobei die Weichphase durch zumindest ein Element aus einer ersten Elementgruppe umfassend Zinn, Antimon, Indium und Wismut, gebildet ist und die Hartpartikel durch Scandium und Zirkonium sowie durch zumindest ein Element aus einer zweiten Elementgruppe, umfassend Kupfer, Mangan, Kobalt, Chrom, Zink, Magnesium und Eisen, bzw. durch intermetallische Phasen aus Scandium, Zirkonium mit Aluminium bzw. Aluminium mit den Elementen aus der zweiten Elementgruppe gebildet sind, **dadurch gekennzeichnet, dass** die Aluminiumknetlegierung siliziumfrei ist, das oder die Element(e) der ersten Elementgruppe in einem Ausmaß von in Summe maximal 4,5 Gew.-%, das oder die Element(e) der zweiten Elementgruppe in einem Ausmaß von in Summe maximal 8,5 Gew.-%, vorzugsweise 3,5 Gew.-%, Scandium und Zirkonium in einem Ausmaß von in Summe von maximal 0,8 Gew.-% vorliegen und den Rest Aluminium mit dem üblichen erschmelzungsbedingten Verunreinigungen bildet.

2. Dreischicht-Lagerelement nach Anspruch 1, **dadurch gekennzeichnet, dass** der Anteil der Weichphase mindestens 0,1 Gew.-% beträgt.

3. Dreischicht-Lagerelement nach Anspruch 1 oder 2, **dadurch gekennzeichnet, dass** der Anteil des oder der Elemente(s) der zweiten Elementgruppe mindestens in Summe 0,1 Gew.-% beträgt.

4. Dreischicht-Lagerelement nach einem der vorhergehenden Ansprüche, **dadurch gekennzeichnet, dass** der Anteil an Scandium und Zirkonium mindestens in Summe 0,05 Gew.-%, insbesondere 0,1 Gew.-% beträgt.

5. Dreischicht-Lagerelement nach einem der vorhergehenden Ansprüche, **dadurch gekennzeichnet, dass** der Anteil an Zirkonium im Bereich zwischen 0,01 Gew.-% und 0,5 Gew.-%, insbesondere im Bereich zwischen 0,05 Gew.-% und 0,23 Gew.-%, beträgt.

6. Dreischicht-Lagerelement nach einem der vorhergehenden Ansprüche, **dadurch gekennzeichnet, dass** der Anteil an Scandium zwischen 0,05 Gew.-% und 0,5 Gew.-%, insbesondere im Bereich von 0,05 und 0,25 Gew.-% beträgt.

7. Dreischicht-Lagerelement nach einem der vorhergehenden Ansprüche, **dadurch gekennzeichnet, dass** die Laufschicht durch eine Blei-, Zinn-, Wismut-, Indium-, oder Kupfer-Basislegierung gebildet ist.

8. Dreischicht-Lagerelement nach einem der Ansprüche 1 bis 6, **dadurch gekennzeichnet, dass** die Laufschicht durch eine Kunststoffschicht gebildet ist.

9. Dreischicht-Lagerelement nach Anspruch 8, **dadurch gekennzeichnet, dass** die Kunststoffschicht aus einer Gruppe umfassend Polyamid 6, Polyamid 66, POM, Silikone, PEK, PI, TPI, P SEK, PPS, PVDF, sowie Mischungen daraus, ausgewählt ist.

10. Dreischicht-Lagerelement nach Anspruch 8 oder 9, **dadurch gekennzeichnet, dass** die Kunststoffschicht einen Festschmierstoff, wie z.B. MoS₂, Grafit, enthält.

11. Dreischicht-Lagerelement nach einem der Ansprüche 1 bis 6 und 8 bis 11, **dadurch gekennzeichnet, dass** die Laufschicht durch einen Gleitlack gebildet ist.

## Claims

1. Three-layer bearing element, in particular an anti-friction bearing or thrust ring, with a support shell, a running layer and a base layer disposed in between, and the base layer is made from a wrought aluminium alloy with an aluminium matrix in which at least one soft phase and hard particles are embedded, and the soft phase contains at least one element from a first group of elements comprising tin, antimony and bismuth, and the hard particles are scandium and zirconium, and at least one element from a second group of elements comprising copper, manganese, chromium, zinc, magnesium and iron, or intermetallic phases of scandium and zirconium with aluminium or aluminium with the elements from the second group of elements, **characterised in that** the wrought aluminium alloy is free of silicon, the element or elements from the first group of elements are present in a quantity of at most 4.5 % by weight, the element or elements from the second group of elements are present in a quantity of at most 8.5 % by weight, preferably 3.5 % by weight, scandium and zirconium are present in a quantity of at most 0.8 % by weight in total and the rest is aluminium with the usual impurities induced by smelting.

2. Three-layer bearing element as claimed in claim 1, **characterised in that** the proportion of soft phase is at least 0.1 % by weight.

3. Three-layer bearing element as claimed in claim 1 or 2, **characterised in that** the proportion of the element or elements from the second group of elements is at least 0.1 % by weight in total.

4. Three-layer bearing element as claimed in one of the preceding claims, **characterised in that** the proportion of scandium and zirconium is at least 0.05 % by weight, in particular 0.1 % by weight, in total.

5. Three-layer bearing element as claimed in one of the preceding claims, **characterised in that** the proportion of zirconium is in the range of between 0.01 % by weight and 0.5 % by weight, in particular in the range of between 0.05 % by weight and 0.23 % by weight.

6. Three-layer bearing element as claimed in one of the preceding claims, **characterised in that** the proportion of scandium is between 0.05 % by weight and 0.5 % by weight, in particular in the range of between 0.05 and 0.25 % by weight.

7. Three-layer bearing element as claimed in one of the preceding claims, **characterised in that** the running layer is made from an alloy with a base of lead, tin, bismuth, indium or copper.

8. Three-layer bearing element as claimed in one of claims 1 to 6, **characterised in that** the running layer is provided in the form of a plastic layer.

9. Three-layer bearing element as claimed in claim 8, **characterised in that** the plastic layer is selected from a group comprising polyamide 6, polyamide 66, POM, silicone, PEK, PI, TPI, P SEK, PPS, PVDF and mixtures thereof.

10. Three-layer bearing element as claimed in claim 8 or 9, **characterised in that** the plastic layer contains a lubricant, such as MoS_{2,} graphite, for example.

11. Three-layer bearing element as claimed in one of claims 1 to 6 and 8 to 11, **characterised in that** the running layer is provided in the form of an anti-friction varnish.

## Revendications

1. Élément de palier à trois couches, en particulier coussinet lisse ou bague de butée, avec une coquille de soutien, une couche de glissement et une couche support disposée entre les deux, la couche support étant en un alliage d'aluminium de corroyage avec une matrice en aluminium dans laquelle sont incorporées au moins une phase tendre et des particules dures, la phase tendre étant formée par au moins un élément d'un premier groupe d'éléments comprenant l'étain, l'antimoine, l'indium et le bismuth et les particules dures étant formées par du scandium et du zirconium, ainsi que par au moins un élément d'un deuxième groupe d'éléments, comprenant le cuivre, le manganèse, le cobalt, le chrome, le zinc, le magnésium et le fer, respectivement par des phase intermétalliques en scandium, zirconium avec de l'aluminium, respectivement en aluminium avec les éléments du deuxième groupe d'éléments, **caractérisé en ce que** l'alliage d'aluminium de corroyage est exempt de silicium, **en ce que** le ou les éléments du premier groupe d'éléments sont présents dans une quantité telle que la somme en est au maximum de 4,5 % en poids, le ou les éléments du deuxième groupe d'éléments dans une quantité telle que la somme en est au maximum de 8,5 % en poids, de préférence de 3,5 % en poids, le scandium et le zirconium dans une quantité telle que la somme en est au maximum de 0,8 % en poids, et **en ce que** le reste est formé d'aluminium avec les impuretés de fusion habituelles.

2. Élément de palier à trois couches selon la revendication 1, **caractérisé en ce que** la proportion de la phase tendre est d'au moins 0,1 % en poids.

3. Élément de palier à trois couches selon la revendication 1 ou 2, **caractérisé en ce que** la proportion du ou des éléments du deuxième groupe d'éléments atteint au moins une somme de 0,1 % en poids.

4. Élément de palier à trois couches selon l'une quelconque des revendications précédentes, **caractérisé en ce que** la proportion de scandium et de zirconium atteint au moins une somme de 0,05 % en poids, en particulier de 0,1 % en poids.

5. Élément de palier à trois couches selon l'une quelconque des revendications précédentes, **caractérisé en ce que** la proportion de zirconium est comprise dans l'intervalle de 0,01 % en poids à 0,5 % en poids, en particulier dans l'intervalle de 0,05 % en poids à 0,23 % en poids.

6. Élément de palier à trois couches selon l'une quelconque des revendications précédentes, **caractérisé en ce que** la proportion de scandium est comprise dans l'intervalle de 0,05 % en poids à 0,5 % en poids, en particulier dans l'intervalle de 0,05 % en poids à 0,25 % en poids.

7. Élément de palier à trois couches selon l'une quelconque des revendications précédentes, **caractérisé en ce que** la couche de glissement est formée par un alliage de base de plomb, d'étain, de bismuth, d'indium ou de cuivre.

8. Élément de palier à trois couches selon l'une quelconque des revendications 1 à 6, **caractérisé en ce que** la couche de glissement est formée par une couche de plastique.

9. Élément de palier à trois couches selon la revendication 8, **caractérisé en ce que** la couche de plastique est choisie dans un groupe comprenant le polyamide 6, le polyamide 66, le POM, les silicones, le PEK, le PI, le TPI, le P SEK, le PPS, le PVDF, ainsi que des mélanges de ceux-ci.

10. Élément de palier à trois couches selon la revendication 8 ou 9, **caractérisé en ce que** la couche de plastique contient un lubrifiant solide comme par exemple le MoS2 ou le graphite.

11. Élément de palier à trois couches selon l'une quelconque des revendications 1 à 6 et 8 à 11, **caractérisé en ce que** la couche de glissement est formée par une laque de glissement.
